# EUROPEAN PATENT SPECIFICATION

(11) **EP 3 819 531 B1**
(45) Date of publication and mention of the grant of the patent: **24.01.2024**
(21) Application number: 20205673.5
(22) Date of filing: 04.11.2020
(51) Int. Cl.: F16N 11/08, F16N 11/10, F03D 80/70

(54) **MEMBRANE DEVICE**
MEMBRANVORRICHTUNG
DISPOSITIF À MEMBRANE

(30) Priority: 07.11.2019 DK PA201901300
(43) Date of publication of application: 12.05.2021
(73) Proprietor: Danhydra A/S, 7400 Herning (DK)
(72) Inventor: HOVE, Thomas, 7400 Herning (DK)
(74) Representative: Larsen & Birkeholm A/S

(56) References cited:
- EP-A1- 2 472 109
- WO-A1-2014/077707
- WO-A2-2005/003619
- DE-U1-202007 016 788
- DE-U1-202015 003 601

## Description

### Membrane device

The present invention relates to a centralized lubrication system comprising a reservoir for holding a fluid. The reservoir comprises a housing where an elastic membrane able to increase in area constitutes a wall part. The reservoir may be applied in a centralized lubrication system where grease or oil is held and over a period is forced into a system of moving parts such as a wind turbine.

### Background Art:

Often reservoirs used for grease or other lubricants in lubrication systems comprises a cylindric reservoir chamber equipped with a piston for pushing the lubricant towards the outlet.

EP3260754 discloses a reservoir for a lubrication system having a significant grease capacity. The grease is supplied to a reservoir chamber via a channel in a piston rod, and the reservoir or grease chamber is positioned under the piston where the chamber is filled with grease from a grease container mounted at the end of the piston rod. Hereby the grease capacity depends on the capacity of the grease container. By allowing the piston rod to project through the top of the cylinder, the amount of grease in the chamber may be detected from the position of the piston rod. A problem with the known lubrication systems are a limited grease capacity and a risk of trapping air in the grease which may cause an irregular grease supply to the individual lubrication sites. The pump of the lubrication system operates poorly when taking in air, why the pump qualities are lost short-term or long-term. As filling the lubrication system with lubricant must take place at the operational site itself, which in the case of offshore wind turbines means expensive transportation etc., there is a need for a grease lubrication system which reduces such servicing.

DE202007016788U discloses a centralized lubrication system, according to the preamble of claim 1.

The present invention provides an improved and less expensive reservoir for a lubrication system, the reservoir according to the present invention is very easily replaced during maintenance and includes no need for replaceable parts during filling which reduce the price for service.

In a centralized lubrication system according to the present invention, the primary function of the elastic membrane is to compress the lubricant, which may be highly viscous grease, and remove air bubbles or at least reduce the size of the air bubbles thereby increasing the efficiency of a pump forcing grease out of the reservoir.

### Summary of invention:

According to the invention, the invention relates to a centralized lubrication system comprising a reservoir for fluid comprising a housing (1) at least partly constituting a reservoir chamber for fluid which housing (1) is made of metal or similar rigid material and which housing comprises an inlet (2) for fluid and an outlet (3) for fluid, and comprising a pump (5) which is connected to the housing (1) which pump is configured to force fluid out of the reservoir chamber through the outlet (3) during operation, wherein the reservoir chamber of the housing comprises a wall part constituted of an elastic membrane (4) which elastic membrane (4) is configured so that the area of the elastic membrane (4) can and will increase when pressure inside the reservoir chamber is increased as fluid is added to the reservoir chamber and the elasticity of the elastic membrane provides an increased pressure inside the reservoir chamber.

The housing may comprise one, two, three or more wall parts constituted of an elastic membrane. According to any embodiment of the invention, the area of the at least one elastic membrane may be able to increase at least 50% compared to the area of the elastic material in relaxed or unbiased state, or e.g. the area of the elastic material is able to increase at least 100%, or e.g. at least 150%, or e.g. between 100% and 600%.

According to any embodiment of the invention, the elastic membrane may be constituted of a sheet of a fluid resistant e.g. an oil or a grease resistant elastomer such as a nitrile rubber.

According to any embodiment of the invention, the elastic membrane may be fixed to the housing by fastening means. E.g. the fastening means may comprise a first flange or surface of the housing and a corresponding second flange or surface where the elastic membrane is positioned between the first and second flange or surface and maintained in a position relative to the housing as the two flanges or surfaces or forced together by forcing means. E.g. the forcing means are screws or bolts.

According to any embodiment of the invention, the elastic membrane may cover a round or oval or polygonal opening constituting a wall of the reservoir chamber/housing.

According to any embodiment of the second aspect of the invention, the system may be used for filling lubrication systems for wind turbines or the like.

### List of figures:

Figure 1A and 1B disclose respectively a side view and a top view of an embodiment of a reservoir to be used in a lubrication system according to the invention.
Figure 2 discloses a cut-through view of the same embodiment as shown in figs. 1A and 1B.

Throughout the application identical or similar elements of different embodiments are given the same reference numbers.

### Definitions of words:

*In general* - when this expression is used in respect of a feature, the feature may be employed with any embodiment of the invention, even though the specific mentioning appears in the detailed part of the description.

*Elastic membrane* - Is a membrane which is able to resume its normal shape spontaneously after being stretched or compressed, i.e. such a membrane is able to exercise a pressure. This is contrary to a plastic membrane which is able to adapt to forces or to be molded into shape during a soft condition and then maintain this shape after hardening or after the forces stop affecting the membrane. A flexible membrane may be either elastic or plastic depending on the material constituting the membrane.

### Detailed description of invention:

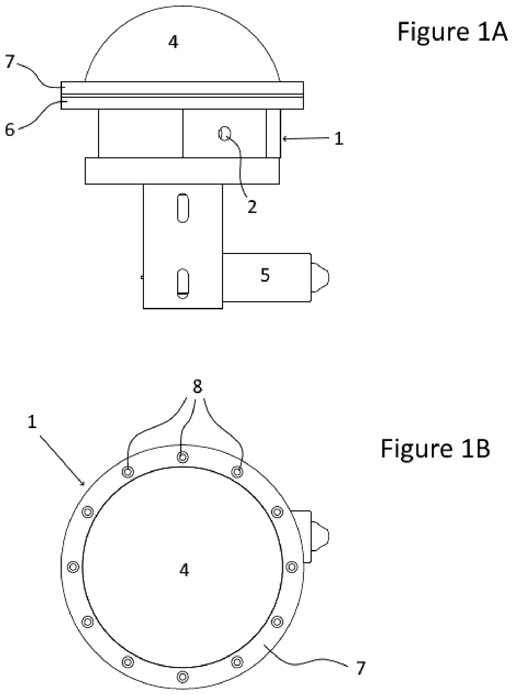

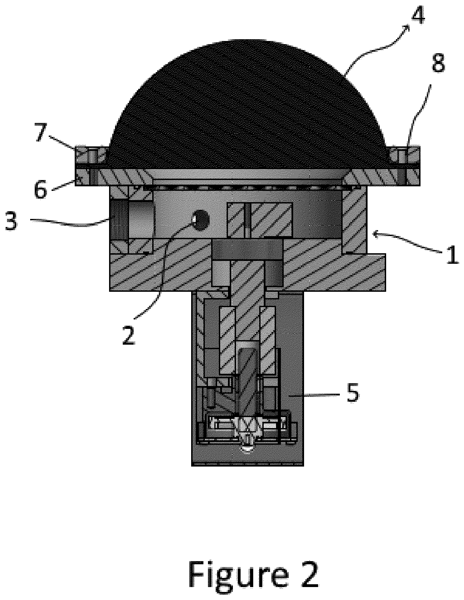

Figures 1A and 1B disclose respectively a side view and a top view of an embodiment of the reservoir to be used in a lubrication system according to the invention. Figure 2 discloses a cut-through-view of the same embodiment.

The embodiment of the reservoir comprises a housing 1 made of metal or a similar rigid and robust material which housing has an inlet 2 for fluid and an outlet for fluid 3. The housing 1 comprises a wall or surface, according to fig. 1A and 2 an upper wall or surface, constituted of an elastic membrane 4, which elastic membrane is configured so that the area of the elastic membrane is able to increase or extend when pressure inside the reservoir is increased as fluid is added to the reservoir. The robust walls of the housing 1 normally forms an open space, e.g. a cylindric open space having a round cross-section profile as shown in the embodiment of figs. 1 and 2, which open space is closed by the wall constituted of the elastic membrane 4. The open space may alternatively have a polyangular e.g. rectangular cross-section profile, and when no pressure is put on the walls of the housing 1, i.e. the elastic membrane 4 is not extended, then the volume of the open space defines a minimum volume of the reservoir which minimum volume is normally larger than 0.

The reservoir may be described as having a reservoir chamber and the walls of this reservoir chamber is constituted partly of the inner walls of the housing 1 and partly of the inner surface of the elastic membrane 4. The inlet 2 and the outlet 3 may be formed as openings through the walls of the housing 1 and the surfaces of the reservoir chamber.

Normally, the elasticity of the membrane is dimensioned so that the pressure inside the reservoir chamber is only slightly higher than the surrounding pressure, i.e. normally the pressure inside the reservoir chamber in a filled state is up to 2 bar higher than the surrounding pressure, e.g. the pressure inside the reservoir chamber in a filled state is around 1 mbar - 1 bar, or e.g. 1-100 mbar higher than the surrounding pressure.

The increased pressure inside the reservoir chamber supports working of a pump connected to the reservoir chamber. Especially when a viscous fluid such as grease is kept in the reservoir chamber, it is advantageous to use the reservoir chamber according to the invention as the increased pressure which is maintained during emptying of the reservoir chamber as long as the volume of the reservoir chamber is larger than the minimum volume, will reduce occurrence of air bubbles and size of occurrent air bubbles in the viscous fluid.

In relaxed or un-biased state, the elastic membrane 4 may be flat, i.e. in this case, the hemispheric shape shown in figs. 1A and 2 is only obtained when fluid is forced into the reservoir chamber through the inlet 2. However, the elastic membrane 4 may also be slightly curved in a relaxed or un-biased state.

E.g. the fluid to be filled into the reservoir chamber may be a viscous fluid such as grease or a less viscous fluid such as oil.

Normally, the area of the elastic membrane may be able to increase at least 50% compared to the area of the elastic material in relaxed or unbiased state. Preferably, the area of the elastic material is able to increase at least 100%, or e.g. at least 150%, or e.g. between 100% and 600% when fluid is forced into the reservoir chamber.

Normally, the reservoir is used in relation with a pump 5 positioned in close connection to the reservoir chamber, which pump 5 will force or dose fluid from the reservoir chamber to a receiving system.

Normally, the elastic membrane is formed as a sheet e.g. a sheet of a fluid resistant e.g. oil or grease resistant elastomer. A well-known material oil resistant elastomer is e.g. be nitrile rubber. However, many different known rubber-types may be used, and elastomers may even be tailor-made for adapting to different fluids.

The elastic membrane 4 is fixed to the housing 1 by fastening means. The fastening means may comprise a first flange or surface 6 of the housing and a corresponding second flange or surface 7 where the elastic membrane 4 is positioned between the first 6 and second 7 flange or surface and maintained in a position relative to the housing 1 as the two flanges or surfaces or forced together by forcing means 8 thereby pressing on each side of the elastic membrane 4.

The forcing means may e.g. be screws or bolts or similar mechanical means able to hold the two flanges or surfaces together with suitable force.

The opening in the wall covered by the elastic membrane may have any shape or form. However, according to one embodiment the opening in wall of the reservoir chamber or housing is round or oval as this shape provides an equally distribution of tear along the edge of the elastic membrane 4.

The reservoir of the present invention may be used in connection with a centralized lubrication system.

Such centralized lubrication systems are e.g. used for filling lubrication systems for wind turbines or the like.

| **Ref. no.** | **Ref. name** |
|---|---|
| 1 | Housing |
| 2 | Inlet for fluid |
| 3 | Outlet for fluid |
| 4 | Elastic membrane |
| 5 | Pump |
| 6 | First flange or surface of the housing |
| 7 | Second corresponding flange or surface |
| 8 | Forcing means |

## Claims

1. A centralized lubrication system comprising a reservoir for fluid comprising a housing (1) at least partly constituting a reservoir chamber for fluid which housing (1) is made of metal or similar rigid material and which housing comprises an inlet (2) for fluid and an outlet (3) for fluid, and comprising a pump (5) which is connected to the housing (1) which pump is configured to force fluid out of the reservoir chamber through the outlet (3) during operation,
**characterized in that** the reservoir chamber of the housing comprises a wall part constituted of an elastic membrane (4) which elastic membrane (4) is configured so that the area of the elastic membrane (4) can and will increase when pressure inside the reservoir chamber is increased as fluid is added to the reservoir chamber and the elasticity of the elastic membrane (4) provides an increased pressure inside the reservoir chamber.

2. A centralized lubrication system according to claim 1, wherein the elasticity of the elastic membrane (4) is dimensioned so that the pressure inside the reservoir chamber in a filled state is up to 2 bar higher than the surrounding pressure, e.g. the pressure inside the reservoir chamber in a filled state is around 1 mbar -1 bar, or e.g. 1-100 mbar higher than the surrounding pressure.

3. A centralized lubrication system according to any previous claim, wherein the area of the elastic membrane (4) is able to increase at least 50% compared to the area of the elastic material in relaxed or unbiased state, or e.g. the area of the elastic material is able to increase at least 100%, or e.g. at least 150%, or e.g. between 100% and 600%.

4. A centralized lubrication system according to any previous claim, wherein the elastic membrane (4) is constituted of a sheet of a fluid resistant e.g. oil or grease resistant elastomer such as a nitrile rubber.

5. A centralized lubrication system according to any previous claim, wherein the elastic membrane (4) is fixed to the housing by fastening means (6,7).

6. A centralized lubrication system according to claim 5, wherein the fastening means comprises a first flange or surface of the housing (6) and a corresponding second flange or surface (7) where the elastic membrane (4) is positioned between the first and second flange or surface and maintained in a position relative to the housing (1) as the two flanges or surfaces are forced together by forcing means (8).

7. A centralized lubrication system according to claim 6, wherein the forcing means (8) are screws or bolts.

8. A centralized lubrication system according to any previous claim, wherein the elastic membrane (4) covers a round or oval or polygonal opening constituting a wall of the reservoir chamber/housing (1).

9. A centralized lubrication system according to any previous claim, which system is used for filling lubrication systems for wind turbines or the like.

## Patentansprüche

1. Zentralschmieranlage mit einem Fluidreservoir, umfassend ein Gehäuse (1), das zumindest teilweise eine Reservoirkammer für Fluid bildet, wobei das Gehäuse (1) aus Metall oder einem ähnlichen starren Material besteht und das Gehäuse einen Einlass (2) für Fluid und einen Auslass (3) für Fluid umfasst, und umfassend eine Pumpe (5), die mit dem Gehäuse (1) verbunden ist, wobei die Pumpe dazu konfiguriert ist, Fluid während des Betriebs aus der Reservoirkammer durch den Auslass (3) zu drücken,
**dadurch gekennzeichnet, dass** die Reservoirkammer des Gehäuses ein Wandteil umfasst, das aus einer elastischen Membran (4) gebildet ist, wobei die elastische Membran (4) so konfiguriert ist, dass der Bereich der elastischen Membran (4) vergrößert werden kann und vergrößert wird, wenn der Druck innerhalb der Reservoirkammer erhöht wird, wenn der Reservoirkammer Fluid hinzugefügt wird und die Elastizität der elastischen Membran (4) einen erhöhten Druck innerhalb der Reservoirkammer bereitstellt.

2. Zentralschmieranlage nach Anspruch 1, **dadurch gekennzeichnet, dass** die Elastizität der elastischen Membran (4) so bemessen ist, dass der Druck im gefüllten Zustand der Reservoirkammer bis zu 2 bar höher als der Umgebungsdruck ist, z. B. der Druck im gefüllten Zustand der Speicherkammer um 1 mbar - 1 bar oder z. B. um 1 - 100 mbar höher als der Umgebungsdruck ist.

3. Zentralschmieranlage nach einem der vorhergehenden Ansprüche, wobei die Fläche der elastischen Membran (4) in der Lage ist, sich um mindestens 50 % im Vergleich zu der Fläche des elastischen Materials in entspanntem oder unvorgespanntem Zustand zu vergrößern, oder z. B. die Fläche des elastischen Materials in der Lage ist, sich um mindestens 100 % oder z. B. um mindestens 150 % oder sich z. B. zwischen 100 % und 600 % zu vergrößern.

4. Zentralschmieranlage nach einem der vorhergehenden Ansprüche, wobei die elastische Membran (4) aus einer Folie aus einem fluidbeständigen, z. B. öl- oder fettbeständigen Elastomer, wie einem Nitrilkautschuk, gebildet ist.

5. Zentralschmieranlage nach einem der vorhergehenden Ansprüche, wobei die elastische Membran (4) an dem Gehäuse durch Befestigungsmittel (6, 7) fixiert ist.

6. Zentralschmieranlage nach Anspruch 5, wobei das Befestigungsmittel einen ersten Flansch oder eine Oberfläche des Gehäuses (6) und einen entsprechenden zweiten Flansch oder eine entsprechende zweite Oberfläche (7) umfasst, wobei die elastische Membran (4) zwischen dem ersten und zweiten Flansch oder der Oberfläche positioniert ist und in einer Position relativ zu dem Gehäuse (1) gehalten wird, wenn die beiden Flansche oder Oberflächen durch Druckmittel (8) zusammengedrückt werden.

7. Zentralschmieranlage nach Anspruch 6, **dadurch gekennzeichnet, dass** die Druckmittel (8) Schrauben oder Bolzen sind.

8. Zentralschmieranlage nach einem der vorhergehenden Ansprüche, wobei die elastische Membran (4) eine runde oder ovale oder mehreckige Öffnung abdeckt, die eine Wand der Reservoirkammer/des Gehäuses (1) bildet.

9. Zentralschmieranlage nach einem der vorhergehenden Ansprüche, wobei die Anlage zum Befüllen von Schmieranlagen für Windkraftanlagen oder dergleichen verwendet wird.

## Revendications

1. Système de lubrification centralisé comprenant un réservoir de fluide comprenant un boîtier (1) constituant au moins en partie une chambre de réservoir de fluide, lequel boîtier (1) est en métal ou matériau rigide similaire et lequel boîtier comprend une entrée (2) pour du fluide et une sortie (3) pour du fluide, et comprenant une pompe (5) qui est reliée au boîtier (1), laquelle pompe est configurée pour forcer du fluide hors de la chambre de réservoir à travers la sortie (3) pendant le fonctionnement,
**caractérisé en ce que** la chambre de réservoir du boîtier comprend une partie de paroi constituée d'une membrane élastique (4) laquelle membrane élastique (4) est configurée de sorte que la zone de la membrane élastique (4) peut et va augmenter lorsque la pression à l'intérieur de la chambre de réservoir est augmentée lorsque du fluide est ajouté à la chambre de réservoir et l'élasticité de la membrane élastique (4) fournit une pression accrue à l'intérieur de la chambre de réservoir.

2. Système de lubrification centralisé selon la revendication 1, dans lequel l'élasticité de la membrane élastique (4) est dimensionnée de sorte que la pression à l'intérieur de la chambre de réservoir à l'état rempli soit jusqu'à 2 bars supérieure à la pression environnante, par exemple la pression à l'intérieur de la chambre de réservoir à l'état rempli est d'environ 1 mbar - 1 bar, ou par exemple 1-100 mbar supérieure à la pression environnante.

3. Système de lubrification centralisé selon une quelconque revendication précédente, dans lequel la zone de la membrane élastique (4) peut augmenter d'au moins 50% par rapport à la zone du matériau élastique à l'état détendu ou non sollicité, ou par exemple la zone du matériau élastique peut augmenter d'au moins 100%, ou par exemple d'au moins 150%, ou par exemple entre 100% et 600%.

4. Système de lubrification centralisé selon une quelconque revendication précédente, dans lequel la membrane élastique (4) est constituée d'une feuille d'un élastomère résistant aux fluides, par exemple résistant à l'huile ou à la graisse, tel qu'un caoutchouc nitrile.

5. Système de lubrification centralisé selon une quelconque revendication précédente, dans lequel la membrane élastique (4) est fixée au boîtier par des moyens de fixation (6, 7).

6. Système de lubrification centralisé selon la revendication 5, dans lequel les moyens de fixation comprennent une première bride ou surface du boîtier (6) et une seconde bride ou surface correspondante (7) où la membrane élastique (4) est positionnée entre la première et la seconde bride ou surface et maintenue en position par rapport au boîtier (1) lorsque les deux brides ou surfaces sont forcées l'une contre l'autre par des moyens de forçage (8).

7. Système de lubrification centralisé selon la revendication 6, dans lequel les moyens de forçage (8) sont des vis ou des boulons.

8. Système de lubrification centralisé selon une quelconque revendication précédente, dans lequel la membrane élastique (4) recouvre une ouverture ronde ou ovale ou polygonale constituant une paroi de la chambre de réservoir/boîtier (1).

9. Système de lubrification centralisé selon une quelconque revendication précédente, lequel système est utilisé pour remplir des systèmes de lubrification d'éoliennes ou analogues.
